# EUROPEAN PATENT APPLICATION

(11) **EP 4 790 081 A1**
(43) Date of publication of application: **12.08.2026**
(21) Application number: 25157151.9
(22) Date of filing: 11.02.2025
(51) Int. Cl.: C08G 75/14, B01J 20/26, C02F 1/62, C08L 81/04

(54) **THIOORTHOESTER POLYMER, METHOD FOR PRODUCING THIOORTHOESTER POLYMERS AND USE OF THIOORTHOESTER POLYMERS**

(71) Applicant: Universität Ulm, 89081 Ulm (DE)
(72) Inventor: von Delius, Max, 89081 Ulm (DE); Kraus, Jan, 89081 Ulm (DE); Leopold, Kerstin, 89081 Ulm (DE); Gruber, Andreas, 89081 Ulm (DE)
(74) Representative: Pfenning, Meinig & Partner mbB

(57) **Abstract**

The present invention refers to a method for producing thioorthoester polymers by a catalysed reaction of at least one compound of formula (I) 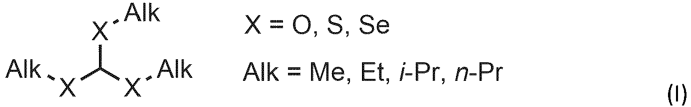 with at least one dithiol of the formula (II) 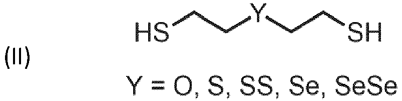 and following separation and cleansing steps. Moreover, the present invention also refers to such thioorthoester polymers and their use as a metal or metalloid scavenger.

## Description

The present invention refers to a method for producing thioorthoester polymers by a catalysed reaction of at least one compound of formula (I) 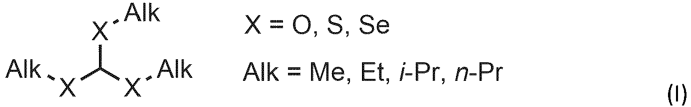 with at least one dithiol of the formula (II) 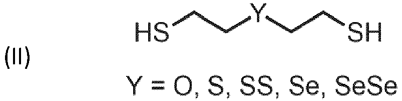 and following separation and cleansing steps. Moreover, the present invention also refers to such thioorthoester polymers and their use as a metal or metalloid scavenger.

Heavy metals, such as antimony and palladium, are integral to industrial and manufacturing processes due to their unique chemical properties. Antimony is commonly used in flame retardants and as an electrode material in alternative battery technologies like sodium-ion and calcium-antimony batteries. Palladium is indispensable in pharmaceutical synthesis, enabling complex chemical reactions (e.g., Suzuki and Sonogashira coupling) and in automotive catalytic converters, where it helps reduce vehicle emissions by transforming harmful gases like nitric oxides and carbon monoxide into less harmful substances.

However, these metals pose serious health and environmental risks.

Antimony exposure has been linked to carcinogenic effects, primarily through the generation of reactive oxygen species (ROS), which damage tissues. Palladium exposure induces oxidative stress, apoptosis in organs like the liver and kidneys, and bioaccumulation in the kidneys. Toxic exposure pathways include inhalation and ingestion, with palladium chloride complexes being particularly harmful due to their allergenic properties.

Environmental contamination is a significant concern. Global antimony emissions have been estimated at 2000 tons annually (1995-2010), with Asia contributing 57% and Europe 24%, driven by fuel combustion, industrial processes, and waste incineration. Traffic emissions further release antimony (from brake wear) and palladium (from catalytic converters), with elevated levels found near roads and tunnels. Pharmaceutical residues containing palladium also pose exposure risks.

To mitigate these risks, regulatory frameworks impose strict limits. The EU caps antimony in drinking water at 10 µg/L, while palladium limits in pharmaceuticals are set based on treatment-specific guidelines, such as the 33.4 µg/g Pd limit for the breast cancer drug Verzenios. Industrial wastewater, particularly from semiconductor manufacturing, is restricted to 0.5 mg/L of antimony and palladium each.

To comply with these regulations, industries adopt various metal and metaloid removal techniques, including adsorption, ion exchange, membrane separation, and chemical precipitation. These methods aim to minimize residual metal concentrations in products and waste, ensuring compliance with environmental and health standards.

The removal of metals and metaloids from solutions can be achieved by well-established, insoluble materials such as ion exchange resins or active carbons (Organic Process Research & Development 2007, 11, 477-481). These types of materials have however serious limitations in respect to their adsorption capacity, adsorption kinetics as well as their selectivity for one metal or metaloid over another. It is known from EP 1 769 094 A2 that improved performance for metal or metaloid scavenging from solutions can be achieved with insoluble materials that are based on the covalent immobilization of metal-scavenging functional groups such as thiols on insoluble silica gel or polymer resins such as polystyrene. These materials have high specific surface areas and offer the advantage that they can be employed in flow (Organic Process Research & Development 2007, 11, 477-481), but the use of a bulk material that does not contribute to scavenging inherently limits adsorption capacity.

The prior art on thioorthoester polymers is limited to highly soluble liquid materials (US 5,225,472 A) and amorphous resins (glasses) with high refractive index (JP 2003212843 A and JP 3974404 B2).

The present invention therefore addresses the mentioned drawbacks in the prior art and to provide insoluble thioorthoester polymers which consist in their entirety by a thiophilic structure which in conjunction with a high specific surface area allows the applicability in metal and metaloid scavenging as well as in other fields. Moreover, the thioorthoester polymers should be producible efficiently and cost-effectively.

This problem is solved by the method for producing thioorthoester polymers having the features of claim 1, the thioorthoester polymers having the features of claim 8 and their uses with the features of claims 12 and 15. The further dependent claims define preferred embodiments.

According to the present invention a method for producing thioorthoester polymers is provided comprising the following steps:
a) mixing at least one compound of the formula (I) 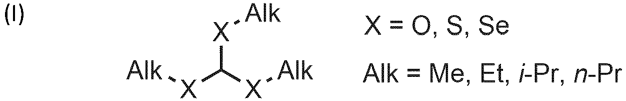 with at least one dithiol of the formula (II) 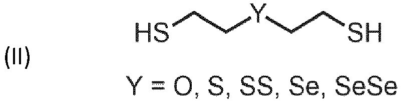 and a catalyst selected from the group of Lewis or Brønsted acid for the polycondensation of the compounds of formula (I) and (II), in a polar, aprotic organic solvent,
b) stirring the mixture of step a) to temperatures of 20 to 80°C for 1 to 24 h and purging the mixture with an inert gas for removing the by-products,
c) separating the thioorthoester polymer from the solvent and
d) cleansing the thioorthoester with a solvent and drying of the thioorthoester polymer.

This method ensures high product quality and purity through controlled reaction conditions. Removing by-products under inert gas enhances the purity of the polymer.

It is preferred that the molar ratio of the compound of formula (I) to the dithiol of formula (II) is within a range of 1:2, preferably 1.2:1.7, and more preferably 1.3:1.5. These preferred reactant ratio maximize the polymerization efficiency while minimizing reactant waste, making the process more cost-effective.

According to a preferred embodiment, the Lewis or Brønsted acid is selected from the group consisting of iron(III) chloride, aluminum(III) chloride, boron trifluoride diethyl etherate, trifluoroacetic acid, methanesulfonic acid, paratoluenesulfonic acid, and combinations thereof.

The Lewis or Brønsted acid is preferably added as a solution in an amount of 0.05 to 10 equivalents, more preferably 0.07 to 0.2 equivalents, most preferably 0.1 equivalents.

Selecting effective catalysts and precisely dosing them ensures efficient and controlled reactions while reducing catalyst consumption.

The polar, aprotic solvent used is preferably selected from the group of benzonitrile, acetonitrile, or chloroform, and mixtures thereof, wherein benzonitrile is the most preferred solvent. The choice of such solvents enhances the reactivity and stability of the reactants during polymerization.

It is preferred that during the stirring in step b) the temperature is within a range of 20 to 80°C, preferably 70 to 80°C and/or the duration of the stirring is from 1 to 24 h, preferably from 1 to 3 h. It is preferred that the temperature is set by microwave heating since this technology allows precise temperature control and accelerates the reaction which improves the process efficiency.

Preferably, the separation step involves a mechanical separation method, preferably selected from the group consisting of filtration, flotation, sedimentation, centrifugation, and combinations thereof. Most preferred separation technique is the filtration.

The mass yield of the thioorthoester polymer is preferably in a range of 30 to 100%, more preferably 75 to 95% which demonstrates the effectiveness of the method and minimizes material loss.

According to the present invention, a thioorthoester polymer having the repeating unit of formula (III) 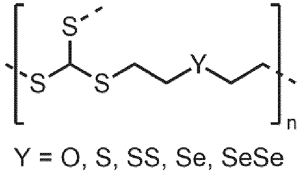 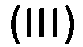 is provided, wherein the sulfur content of the thioorthoester polymer, determined by elemental analysis is in a range from 41 to 66%.

The high sulfur content allows the polymer to be ideal for binding thiophilic metals.

The thioorthoester polymer has preferably a low density, more preferably in the range of 0.1 to 0.5 g/mL, and a porous structure with a high specific surface area, preferably in the range of 0.2 to 1.8 m²/g. Such a low density and high porosity optimize the adsorption surface, making the polymer versatile for various applications.

The thioorthoester polymer of the present invention have preferably a solubility of less than 1 mg/L in solvents selected from the group consisting of water, methanol, acetonitrile, acetone, THF, chloroform, toluene, ethyl acetate, dimethylformamide and carbon disulfide and mixtures thereof.

The thioorthoester polymer is preferably producible by the method described above.

The thioorthoester polymer according to the present invention is used as a metal or metalloid scavenger.

By being insoluble in aqueous media and organic solvents (e.g. water, methanol, acetonitrile, acetone, THF, chloroform, toluene, ethyl acetate, dimethylformamide and carbon disulfide and mixtures thereof), the thioorthoester polymer is highly effective for removing metals or metalloids from organic or aqueous solutions. This can serve the purpose of bringing a medical product below the prescribed limit after its synthesis and therefore allows the application in the pharmaceutical industry. Another purpose is to recover a highly valuable metal from a solution, or remove an environmental toxin from wastewater which allows the application in the chemical industry, in public water treatment, or in waste incineration plants. Alternatively, the thioorthoester polymer can be used to enrich trace substances for analytical detection prior to measurement, e.g. for solid phase extraction (SPE).

The metal or metalloid is preferably selected from the group consisting of Ag, Al, Au, Bi, Ca, Cd, Ce, Co, Cr, Cs, Cu, Er, Eu, Fe, Gd, Hg, Ho, Ir, La, Li, Lu, Mg, Mn, Nd, Ni, Os, Pb, Pd, Pm, Pt, Rh, Ru, Sb, Sc, Sm, Sn, Tb, Ti, Tm, V, W, Yb, Zn, and combinations thereof, more preferably the metal or metalloid is thiophilic and selected from the group consisting of Ag, Au, Bi, Cu, Pd, Pt, Sb, and combinations thereof. In a most preferred embodiment the metal or metalloid is Pd or Sb.

It is preferred that the metal or metaloid scavenger is recyclable, whereby recycling refers to a process by which the metal or metaloid is recovered from the scavenger such that the scavenger material can be re-used for one or more additional cycles.

The thioorthoester polymer may also be used for preparing battery cathodes having the advantage that the chemical structure of the thioorthoester polymer enables applications in energy storage systems.

The present invention is further illustrated by the following examples and figures which show specific embodiments according to the present invention. However, these specific embodiments shall not be interpreted in any limiting way with respect to the present invention as described in the claims and the general part of the specification.
Fig. 1 shows thermogravimetric analysis (TGA), fourier transform infrared (FT-IR), ¹³C MAS nuclear magnetic resonance (NMR) and scanning electron microscopy (SEM) data for thioorthoester polymers 1a to 1c.
Fig. 2 a schematic overview of metal adsorption experiments performed with the thioorthoester polymers of the present invention.
Fig. 3 shows palladium loading ratios during adsorption by thioorthoester polymers of the present invention.
Fig. 4 shows palladium loading ratios during adsorption by commercially available sorbent material.
Fig. 5 shows antimony loading ratios during adsorption by the new thioorthoester polymer sorbent material
Fig. 6 shows a cyclic voltammogram of thioorthoester polymer material/SWCNT material against Li at a scan rate of 0.1 mV/S.

### Example 1

### Synthesis of the Thioorthoester polymers 1a-c from tris(methylthio)methane

General procedure according to formula I and II (X = S, R = Me, Y = O, S, SS):
A specified amount of anhydrous PhCN was deoxygenated with Ar for 10 min. Tris(methylthio)methane and the respective dithiol according to formula II were added. After subsequent addition of iron(III) chloride dissolved in anhydrous deoxygenated MeCN (with Ar for 10 min) in one portion, the mixture was stirred at 75 °C (oil bath temperature) for 3 h. While stirring, a continuous stream of Ar was bubbled through the reaction mixture. The mixture was cooled to r.t., the precipitate was filtered off, washed with specified amounts of solvent and dried in vacuo.

### Synthesis of thioorthoester polymer 1a according to formula III (Y = S)

Tris(methylthio)methane (1.23 g, 7.97 mmol, 1.0 eq.) and 2,2'-thiodiethanethiol (1.85 g, 11.99 mmol, 1.5 eq.) were added to PhCN (30 mL). A solution of iron(III) chloride in MeCN (0.13 g, 0.80 mmol, 10 mol% in 2.6 mL MeCN (302 mM stock solution)) was added and the mixture was stirred at 75 °C (oil bath) for 3 h. The precipitate was filtered, washed with MeCN (12 x 125 mL), then deionized water (3 x 100 mL) and dried in vacuo. The product 1a was obtained (1.23 g, 64% yield based on recovered mass) as a colorless rubber-like solid.

¹H MAS NMR (400 MHz): δ = 5.65, 3.43 ppm.

¹³C MAS NMR (101 MHz): δ = 56.9, 33.5 ppm.

IR: 2906, 1639, 1413, 1259, 1195, 1131, 1030, 845, 741, 708, 682, 422, 420 cm⁻¹.

Elemental Analysis (EA): found: C (34.05%), H (5.68%), S (59.09%); calculated: C (34.82%), H (5.43%), S (59.75%).

### Synthesis of thioorthoester polymer 1b according to formula III (Y = O)

Tris(methylthio)methane (1.23 g, 7.97 mmol, 1.0 eq.) and 2,2'-oxydiethan-ethiol 2b (1.66 g, 12.01 mmol, 1.5 eq.) were added to PhCN (30 mL). A solution of iron(III) chloride in MeCN (0.13 g, 0.80 mmol, 10 mol% in 2.6 mL MeCN (302 mM stock solution)) was added and the mixture was stirred at 75 °C (oil bath) for 3 h. The precipitate was filtered, washed with MeCN (12 x 125 mL), then deionized water (3 x 100 mL) and dried in vacuo. The product 1b was obtained (1.01 g, 58% yield based on recovered mass) as a colorless rubber-like solid.

¹H MAS NMR (400 MHz): δ = 5.61, 4.09, 3.49 ppm.

¹³C MAS NMR (101 MHz): δ = 71.5, 57.3, 33.0 ppm.

IR: 2915, 2854, 1473, 1401, 1355, 1286, 1181, 1094, 1035, 1013, 955, 757, 476 cm⁻¹.

Elemental Analysis (EA): found: C (36.10%), H (5.67%), S (41.21%), O (10.62%); calculated: C (38.68%), H (6.03%), S (44.25%), O (11.04%).

### Synthesis of thioorthoester polymer 1c according to formula III (Y = SS)

Tris(methylthio)methane (161 mg, 1.04 mmol, 1.0 eq.) and 2,2'-disul-fanediyldiethanethiol 2c (291 mg, 1.56 mmol, 1.5 eq.) were added to PhCN (50 mL). A solution of iron(III) chloride in MeCN (17 mg, 0.10 mmol 10 mol% in 0.4 mL MeCN (300 mM stock solution)) was added and the mixture was stirred at 75 °C (oil bath) for 3 h. The formed precipitate was filtered, washed with MeCN (10 x 10 mL), then deionized water (3 x 10 mL) and dried in vacuo. The product 1c was obtained (150 mg, 50% yield based on recovered mass) as a colorless solid.

¹H MAS NMR (400 MHz): δ = 6.30, 3.94, 3.60 ppm.

¹³C MAS NMR (101 MHz): δ = 59.8, 40.2, 39.7, 39.3, 36.3, 35.5, 35.1, 33.8 ppm. IR: 2957, 29121, 14047, 1182, 11087, 1049, 730, 6768 cm⁻¹ .

Elemental Analysis (EA): found: C (27.62%), H (4.50%), S (66.10%); calculated: C (29.04%), H (4.53%), S (66.44%).

### Example 2

### Synthesis of the Thioorthoester polymer 1a from trimethyl orthoformate

General procedure according to formula I and II (X = O, R = Me, Y = S):
Anhydrous PhCN (10mL) was deoxygenated with Ar for 5 min. Trimethyl orthoformate (0.57 g, 1.0 eq.) and 2,2'-thiodiethanethiol (1.2 g, 1.5 eq.) were added. After subsequent addition of iron(III) chloride (88 mg, 0.1 eq.) dissolved in anhydrous deoxygenated MeCN (with Ar for 10 min) in one portion, the mixture was stirred at 75 °C (microwave heating) for 3 h. The mixture was cooled to r.t., the precipitate was filtered off, washed with MeCN (12 x 125 mL), then deionized water (3 x 100 mL) and dried in vacuo. The product 1a was obtained (1.20 g, 93% yield based on recovered mass) as a colorless rubber-like solid. Characterization data matched those observed for Example 1.

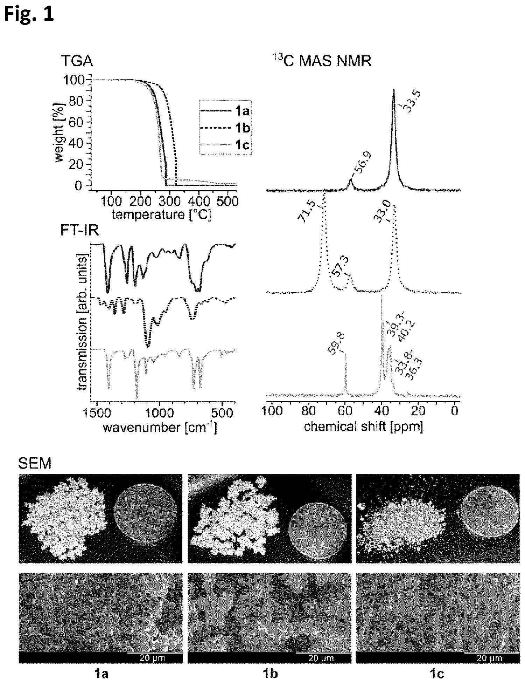

Further characterization of materials 1a-1c was performed by thermogravimetric analysis (TGA), fourier transform infrared (FT-IR), ¹³C MAS NMR (15 kHz rotation, 101 MHz) and scanning electron microscopy (SEM) which is shown in Fig. 1.

### Example 3

### Metal sorption experiments of the Thioorthoester polymer

### a) Metalloid and metal sorption experiments of the Thioorthoester polymer in aqueous solution - screening experiments

The new thioorthoester polymer having the repeating unit of formula (III) was tested as a new sorbent material for the effective removal of metalloids and metals from aqueous solution. Portions of the new polymer material of ca. 30 mg were added to dilute aqueous solutions of metal salts having a metalloid/metal concentration of ca. 1 mg L⁻¹, and the mixtures were shaken for 1 hour at room temperature. Samples were taken from the liquid supernatant and subjected to quantitative element analysis using either total reflection X-ray fluorescence spectrometry (TXRF) or high-resolution continuum source graphite furnace atomic absorption spectrometry (HR-CS-GFAAS) to determine the dissolved metal content. The analyses were carried out in triplicate and control experiments without added polymer material were performed to rule out non-specific adsorption and contamination issues. The results of these sorption experiments reveal that the sorption efficiency of the new thioorthoester polymer for the tested elements increases in the order Sb < Pt < Cu < Bi < Pd < Au < Ag under the conditions of the experiment.

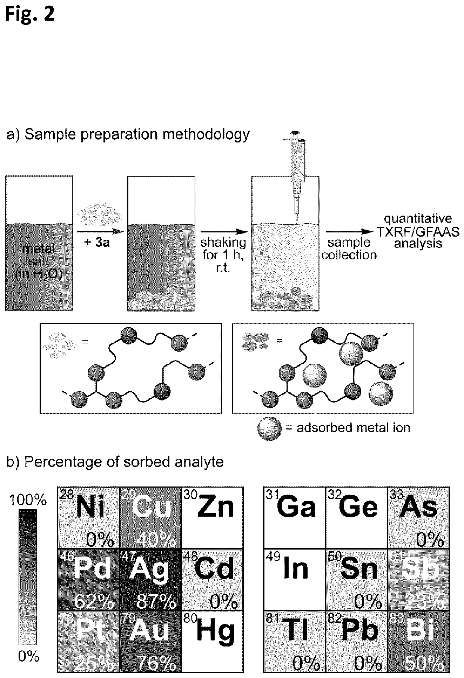

This process is illustrated in Fig. 2 which shows a schematic overview of the performed metal adsorption experiments. Addition of new thioorthoester polymer sorbent material to aqueous solutions of metal nitrates (Ni(II), Cu(II), Pd(II), Ag(I), Cd(II), TI(I), Pb(II), Bi(III)), metal chlorides (Sn(IV), Sb(III), Pt(IV), Au(III)), and As₂O₃, respectively, (element concentration ca. 1 mg L¹; pH 2.5 - 5 after addition of element solutions) was followed by shaking of the mixture at room temperature for 1 h and determination of the metal content by quantitative element analysis. b) Section of the periodic table summarizing the percentage of analyte sorbed by new thioorthoester polymer sorbent material in aqueous solution after 60 min. Elements Zn, Hg, Ga, In, Ge were not selected for the test for practical reasons.

Elements shown in light grey were also tested but showed no adsorption, indicating a remarkable specificity for certain coinage metals (Pd: 62%, Au: 76%, Ag: 87%) over heavy metals such as Cd or Pb (both 0%) that would typically be expected to bind to thioethers.

### b) Palladium sorption experiments of the Thioorthoester polymer in organic solution - kinetic study

For adsorption experiments, a sample of 20-30 mg sorbent material, i.e. thioorthoester polymer having the repeating unit of formula (III) or QuadraPure^{®} TU, was placed in a sample container and 20 mL of a palladium acetate solution (solution A) was added. Solution A was prepared by dissolving an equivalent amount of palladium acetate in 50, 100 or 200 mL of THF to give a palladium (Pd) concentration of 40 mg L⁻¹. Three replicates of this mixture and a reference without sorbent, i.e. a container filled with 20 mL of solution A only, were shaken on an orbital shaker at 230 rpm for up to 28 hours. Samples were taken from the solutions every 30 to 60 minutes for determination of Pd concentration (*β*) by total reflection X-ray fluorescence spectrometry (TXRF). Calculation of loading ratios (q) was achieved using equation 1: $q \left(t\right) = \frac{\left({\overline{β}}_{reference}-β{\left(t\right)}_{sample}\right) ⋅ V}{{m}_{adsorbent}}$

Loading ratios are plotted against the sampling time allowing a non-linear regression of the data using Pseudo-Second Order PSO kinetic equation (eq. 2). $q \left(t\right) = \frac{{q}_{e}^{2} {k}_{2} t}{1 + {q}_{e} {k}_{2} t}$

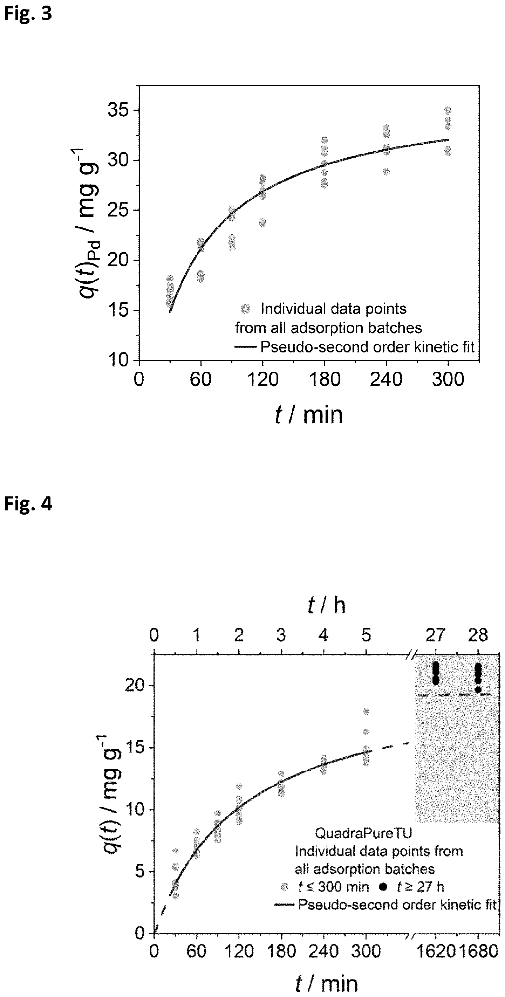

Fig. 3 shows palladium loading ratios during adsorption by thioorthoester polymer sorbent material of the present invention using pseudo-second order kinetic fit. (Loading ratios: grey data points; PSO kinetic fit: red; Number of replicate adsorption batches nₑₓₚ = 3; Number of replicate measurements nₘₑₐₛ = 3).

Fig. 4 shows palladium loading ratios during adsorption by commercially available sorbent material *QuadraPure^{®} TU* using pseudo-second order kinetic fit. (Loading ratios: grey (t ≤ 300 min) and black (t ≥ 27 h) data points; PSO kinetic fit: red; Number of replicate adsorption batches nₑₓₚ = 3; Number of replicate measurements nₘₑₐₛ = 3).

For a duration of up to 300 min, the data is well described by the PSO kinetic fit. This is evident in the adjusted pseudo squared correlation coefficient *p s e u d o -R* ² being above 0.91 and the *Marquadt's* percent standard deviation *MPSD* being below 10 %. The maximum predicted equilibrium capacity *qₑ* as derived from the PSO kinetic fit is 41.2 ± 0.4 mg g⁻¹ for the new thioorthoester polymer sorbent material whereas for the commercially available sorbent material *QuadraPure^{®} TU* a maximum value of only 22.2 ± 1.0 mg g⁻¹ was found. This agrees well to maximum capacity of 23 mg g⁻¹ which is reported for this material in literature *[*A. Hinchcliffe, C. Hughes, D.A. Pears, M.R. Pitts, QuadraPure Cartridges for Removal of Trace Metal from Reaction Mixtures in Flow / Organic Process Research & Development, Organic Process & Development 11 (2007) 477-481*].* The mean kinetic rate constants (*k₂*) as determined by the PSO are 0.52 ± 10⁻³ g mg⁻¹ min⁻¹ for the new material and 0.46 ± 10⁻³ g mg⁻¹ min⁻¹ for *OuadraPure^{®} TU.*

### c) Antimony sorption experiments of the Thioorthoester polymer in aqueous solution - kinetic study

For adsorption experiments, a sample of 20-30 mg of the new thioorthoester polymer sorbent material having the repeating unit of formula (III) was placed in a sample container and 20 mL of an aqueous antimony solution (solution B) with a concentration of 2 mg L⁻¹ were added. Solution B was prepared by diluting 200 µL of an antimony element standard solution with a concentration of 1000 mg L⁻¹ in 100 mL ultrapure water. Three replicates of this mixture and a reference without sorbent, i.e. a container filled with 20 mL of solution B only, were shaken on an orbital shaker at 230 rpm for up to 8 hours. Samples were taken from the solutions every 40 minutes for determination of Sb concentration (*β*) by graphite furnace atomic absorption spectrometry (GFAAS). Calculation of loading ratios (*q(t)*) and derivation of maximum predicted equilibrium capacity *qₑ* and the mean kinetic rate constants (*k₂*) were achieved as described above using equations 1 and 3. Here too, the data is well described by the PSO kinetic fit with an adjusted pseudo squared correlation coefficient *p s e u d o -R* ² being above 0.92 and the *Marquadt's* percent standard deviation *MPSD* being below 9 %.

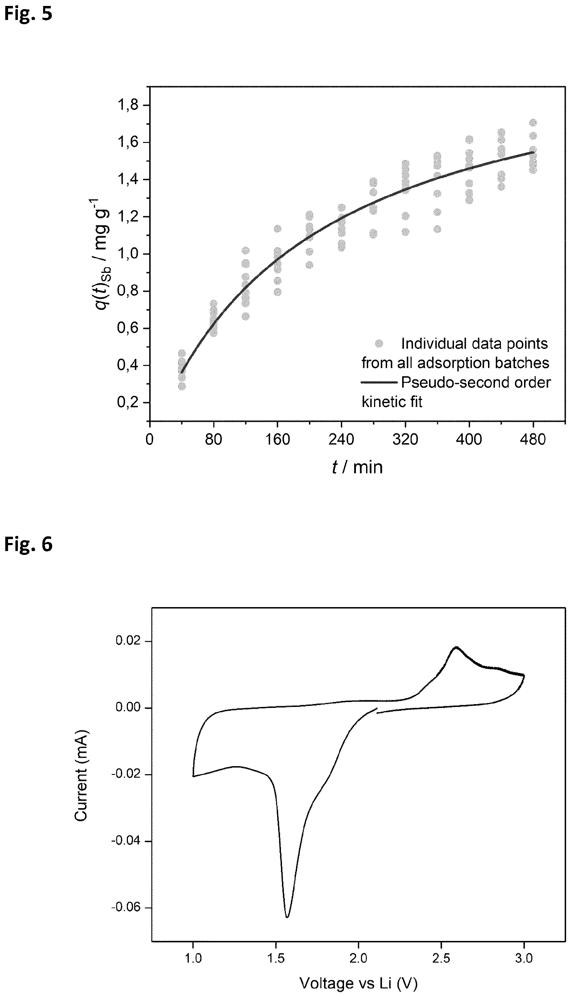

Fig. 5 shows antimony loading ratios during adsorption by the new thioorthoester polymer sorbent material using pseudo-second order kinetic fit. (Loading ratios: grey data points; PSO kinetic fit: red; Number of replicate adsorption batches nₑₓₚ = 3; number of replicate measurements nₘₑₐₛ = 3).

The maximum predicted equilibrium capacity *qₑ* for Sb as derived from the PSO kinetic fit is 2.32 ± 0.12 mg g⁻¹ and the mean kinetic rate constants (*k₂*) is 2.42 · 10⁻³ g mg⁻¹ min⁻¹ for the new material.

### d) Thioorthoester Polymer Cyclability for Antimony Adsorption

The reusability of the polymer for adsorption of antimony was shown by determination of the desorption efficiency followed by successive determination of capacity of antimony re-adsorption. Desorption of Sb from the loaded polymer (see Example 3c) was performed in batch at room temperature in a total of six successive 10-minute-steps using 6 mol L¹ hydrochloric acid in the first four and 12 mol L¹ hydrochloric acid in the last two steps. With 67 - 80 % most Sb is desorbed within the first three desorption steps. After successful desorption, the reusability of the polymer was tested by repeating the antimony adsorption on the polymer analogously to the procedure described in Example 3c). This cycle was repeated again, resulting in 3 full adsorption-desorption-cycles. Determination of maximum predicted equilibrium capacities *qₑ* for Sb adsorption after 1^{st}, 2^{nd} and 3^{rd} adsorption cycle revealed reusability of the novel polymer with a capacity reduction of only 10 to 25 %.

### Example 4

### Battery experiments of the Thioorthoester polymer

For preparation of the electrodes, the material according to formula (III) was prepared in the way described in Example 1, except for the addition of 10 mg single-walled carbon nanotubes (SWCNT, (6,5) chirality enriched). A slurry was made by grinding an admixture of 7:2:1 weight ratio of the active material (thioorthoester polymer with SWCNT), conductive additive (acetylene black) and binder (polyvinylidene fluoride, PVDF) using N-methyl-2-pyrrolidone (NMP) as dispersing agent. The slurry was coated on carbon coated aluminium foil using a doctor blade and dried in a vacuum oven (Thermo Fisher Scientific, VT 6060 M) for 12 h at 65 ºC. The mass loading of each electrode (cut into circular disks of 12 mm) was maintained to be ^{~}0.6 mg/cm². 12 mm circular disks of Lithium foil were cut, polished and used as the anode. 1 M Lithium bis(trifluoromethanesulfonyl)imide (LiTFSI) + 0.25 M LiNOs dissolved in 1:1 (v:v) mixture of dioxolane (DOL) and 1,2-dimethoxyethane (DME) was used as the electrolyte (120 µL electrolyte per cell). Batteries were assembled in coin cells type 2032 using Whatman glass fiber as separator in an argon filled glovebox with oxygen and water level less than 0.1 ppm. The cyclic voltammogram was measured at a scan rate of 0.1 mV/s within the voltage window of 1-3 V (s. Fig. 6)

## Claims

1. Method for producing insoluble thioorthoester polymers comprising the steps:
a) mixing at least one compound of the formula (I) 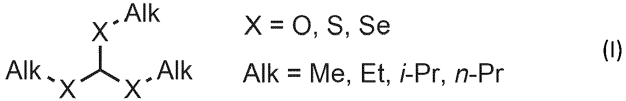 with at least one dithiol of the formula (II) 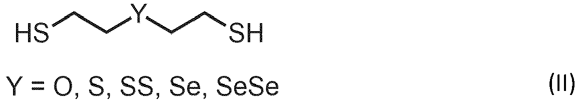 and a catalyst selected from the group of Lewis or Bronsted acid for the polycondensation of the compounds of formula (I) and (II), in a polar, aprotic organic solvent,
b) stirring the mixture of step a) to temperatures of 20 to 100°C for 1 to 24 h and purging the mixture with an inert gas for removing the by-products,
c) separating the thioorthoester polymer from the solvent and
d) cleansing the thioorthoester with a solvent and drying of the thioorthoester polymer.

2. Method of claim 1,
**characterized in that** the molar ratio of the compound of formula (I) to the dithiol of formula (II) is within a range of 1:2, preferably 1.2:1.7, and more preferably 1.3:1.5.

3. Method of any of claims 1 or 2,
**characterized in that** the Lewis or Bronsted acid is selected from the group consisting of iron(III) chloride, aluminium(III) chloride, boron trifluoride diethyl etherate, trifluoroacetic acid and methane sulfonic acid, para-toluene sulfonic acids and combinations thereof, wherein the Lewis or Bronsted acid is preferably added as a solution in an amount of 0.05 to 10 equivalents, more preferably 0.07 to 0.2 equivalents, most preferably 0.1 equivalents.

4. Method of any of claims 1 to 3,
**characterized in that** polar, aprotic solvent is selected from the group consisting of benzonitrile, acetonitrile, chloroform, and mixtures thereof, preferably benzonitrile.

5. Method of any of claims 1 to 4,
**characterized in that** during the stirring in step b) the temperature is within a range of 40 to 90°C, preferably 70 to 80°C and/or the duration of the stirring is from 1 to 12 h, preferably from 1 to 3 h, wherein the temperature is preferably set by microwave heating.

6. Method of any of claims 1 to 5
**characterized in that** the separating step is a mechanical separation, preferably selected from the group of filtration, flotation, sedimentation, centrifugation and combinations thereof, more preferably filtration.

7. Method of any of claims 1 to 6,
**characterized in that** the mass yield of the thioorthoester polymer is in a range of 30 to 100%, preferably 75 to 95%.

8. Thioorthoester polymer having the repeating unit of formula (III) 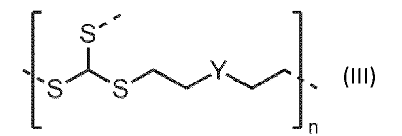 Y = O, S, SS, Se, SeSe
wherein the sulfur content of the thioorthoester polymer, determined by elemental analysis is in a range from 41 to 66%.

9. Thioorthoester polymer of claim 8,
**characterized in that** the thioorthoester polymer has a density lower than 0.8 mg/mL, preferably in the range of 0.1 to 0.5 g/mL and a porous structure with a specific surface area larger than 0.1 m²/g, preferably in the range of 0.2 to 1.8 m²/g.

10. Thioorthoester polymer of any of claims 8 or 9,
**characterized in that** the thioorthoester polymer has a solubility of less than 1 mg/L in solvents selected from the group consisting of water, methanol, acetonitrile, acetone, THF, chloroform, toluene, ethyl acetate, dimethylformamide and carbon disulfide and mixtures thereof.

11. Thioorthoester polymer of any of claims 8 to 10,
**characterized in that** the thioorthoester polymer is producible by the method of any of claims 1 to 7.

12. Use of the thioorthoester polymer of any of claims 8 to 11 as a metal or metaloid scavenger.

13. Use of claim 12,
characterized that the metal or metaloid is selected from the group consisting of Ag, Al, Au, Bi, Ca, Cd, Ce, Co, Cr, Cs, Cu, Er, Eu, Fe, Gd, Hg, Ho, Ir, La, Li, Lu, Mg, Mn, Nd, Ni, Os, Pb, Pd, Pm, Pt, Rh, Ru, Sb, Sc, Sm, Sn, Tb, Ti, Tm, V, W, Yb, Zn, and combinations thereof, preferably that the metal or metalloid is thiophilic and selected from the group consisting of Ag, Au, Bi, Cu, Pd, Pt, Sb, and combinations thereof, and more preferably that the metal or metalloid is Pd or Sb.

14. Use of the thioorthoester polymer of any of claims 8 to 12,
**characterized in that** the metal or metaloid scavenger is recyclable, whereby recycling refers to a process by which the metal or metaloid is recovered from the scavenger such that the scavenger material can be re-used for one or more additional cycles.

15. Use of the thioorthoester polymer of any of claims 8 to 11 for preparing battery cathodes.
